# EUROPEAN PATENT SPECIFICATION

(11) **EP 3 310 473 B1**
(45) Date of publication and mention of the grant of the patent: **20.03.2019**
(21) Application number: 16731120.8
(22) Date of filing: 20.06.2016
(51) Int. Cl.: B01J 20/06, B01J 20/28, B01J 20/34, C02F 1/28, C02F 101/20, C02F 101/10, C02F 103/06, C01G 49/02

(54) **METHOD FOR DESORPTION OF IRON BINDING METALS AND OXYANIONS FROM SUPERPARAMAGNETIC IRON OXIDE NANOPARTICLES (SPION)**
VERFAHREN ZUR DESORPTION VON AN EISEN BINDENDEN METALLEN UND OXYANIONEN AUS SUPERPARAMAGNETISCHEN EISENOXID-NANOPARTIKELN (SPION)
PROCÉDÉ DE DÉSORPTION DE MÉTAUX SE LIANT AU FER ET D'OXYANIONS À PARTIR DE NANOPARTICULES D'OXYDE DE FER SUPERPARAMAGNÉTIQUES (SPION)

(30) Priority: 19.06.2015 EP 15001816
(43) Date of publication of application: 25.04.2018
(73) Proprietor: Universitat Autònoma de Barcelona, 08193 Bellaterra (ES)
(72) Inventor: VALIENTE MALMAGRO, Manuel, 08193 Cerdanyola del Vallès (ES); LIU, Tong, 08193 Cerdanyola del Vallès (ES); HE, Liu, 08193 Cerdanyola del Vallès (ES)
(74) Representative: Ponti & Partners, S.L.P
(86) International application number: PCT/EP2016/064146
(87) International publication number: WO 2016/203038

(56) References cited:
- WO-A2-2012/077033
- MORILLO D ET AL: "Arsenate removal with 3-mercaptopropanoic acid-coated superparamagnetic iron oxide nanoparticles", JOURNAL OF COLLOID AND INTERFACE SCIENCE, ACADEMIC PRESS, NEW YORK, NY, US, vol. 438, 16 October 2014 (2014-10-16), pages 227-234, XP029094839, ISSN: 0021-9797, DOI: 10.1016/J.JCIS.2014.10.005

## Description

### FIELD OF THE INVENTION

The invention relates to a new method for iron binding metals such as arsenic and oxyanions removal and recovery by an adsorption-- desorption system and with sorbent regeneration by taking advantage of the synergic thermo tuning of redox potential of the adsorption-desorption processes.

### STATE OF THE ART

Nowadays, there is a great concern on the study of new adsorbent materials for arsenic clean removal. However, very few studies concern with regeneration and reuse the adsorbent. The present paper reports a new method which could regenerate the adsorbent by controlling the temperature.

Arsenic is one of the most toxic elements occurring naturally in the environment [1]. Arsenic is abundant in our environment with both natural and anthropogenic sources which is considered to be one of the major problems in pollution because of their high toxicity and the consequent risks for human health [2]. Several countries have to deal with the problem of arsenic contamination of groundwater, used for drinking water, such as Bangladesh and India, China, United States, Mexico, Australia, Greece, Italy, Hungary, etc [3]. Thus, there is a growing interest in using low-cost methods and materials to remove arsenic from industrial effluents or drinking water before it may cause significant contamination.

The adsorption from solution has attracted more attention due to its simple procedure that overcomes most of the drawbacks of other techniques. However, almost all of the traditional methods have the problems on adsorbent regeneration. Once the adsorbent becomes exhausted, then, either the toxic elements must be recovered or the adsorbent regenerated or disposed in a controlled dumping site for toxic substances that use to be expensive. Desorption and adsorbent regeneration is a critical step contributing to increase process costs. A successful desorption process must restore the sorbent close to its initial properties for effective reuse. In most of the published arsenic sorption studies, desorption/regeneration was not included. Furthermore, once arsenic is recovered in the pure and concentrated form, the problem of its disposal of this concentrated arsenic product must be addressed. This is a difficult and expensive task. Few attempts have been made to address the handling of concentrated arsenic wastes. Tuutijärvi T [4] has tried five different alkaline solutions: NaOH, Na2CO3, Na2HPO4, NaHCO3 and NaAc for arsenate batch desorption and regeneration. But this process also needs to spend a lot of alkaline solution which is very expensive and is not feasible for industrial sense.

D. Morillo *et al.* [5] reported on a method of adsorbing arsenate and arsenite in a SPION based adsorbent filter in the presence of HNO₃, presumably at room temperature (20°C), followed by desorption of arsenate and arsenite from the SPION based adsorbent filter, presumably at room temperature (20°C).

### DESCRIPTION OF THE INVENTION

### BRIEF DESCRIPTION OF THE INVENTION

The present invention relates to a method for desorption of iron binding metals and oxyanions in accordance with claim 1.

In an aspect, the disclosure relates to a new method for arsenic desorption and sorbent regeneration with no reagents added by taking advantage of the thermodynamic properties of the adsorption system. More importantly, the temperature effect on the adsorption-desorption properties has been demonstrated to help in the arsenic desorption and sorbent regeneration of a Forager sponge loaded with superparamagnetic iron oxide nanoparticle (sponge-SPION).

In this sense, our studies indicate that we can use the lower temperature for adsorption and higher temperature for desorption, thereby provide a new method for recovery of toxic element and regeneration of adsorbents. The temperature-dependence of arsenic adsorption by sponge-SPION has been demonstrated, low-temperature helps the adsorption process and high-temperature leads the desorption process to happen.

In a more preferred embodiment, at 20°C, as time goes on, the adsorption process reaches equilibrium at about 1h. At 70°C, desorption process occurs as contact time increases, desorption equilibrium was then gradually achieved with contact time. Arsenic is, thus, found to be more strongly adsorbed on the sponge-SPION at 20°C than at 70°C.

In a further aspect, the disclosure relates to a recycled method for arsenic removal in water. Herein, we develop a new method for arsenic adsorption-- desorption and sorbent regeneration by taking advantage of the synergic thermo tuning of redox potential of the adsorption-desorption system of the arsenic adsorption by superparamagnetic iron oxide nanoparticle (SPION) based adsorbent filters.

In a more preferred embodiment, a method for arsenic (particularly As(V) and As(III)) adsorption-desorption and sorbent regeneration by taking advantage of the thermodynamic properties and redox potential of the adsorption system, wherein the support of the superparamagnetic iron oxide nanoparticle (SPION) is a Forager sponge. This method not only saves a lot of reagent for recovering the sorbent, but also the adsorbent can be recycled and reused, which is low-cost and practical.

In a yet further aspect, the disclosure relates to a new reagent-less method for elements removal and recovery by an adsorption-- desorption system with sorbent regeneration by taking advantage of the synergic thermo tuning and redox potential adjust for the adsorption-desorption processes. Redox potential adjustment is done by variation in the electric field, so the addition of reagents is not necessary.

### DESCRIPTION OF THE FIGURES

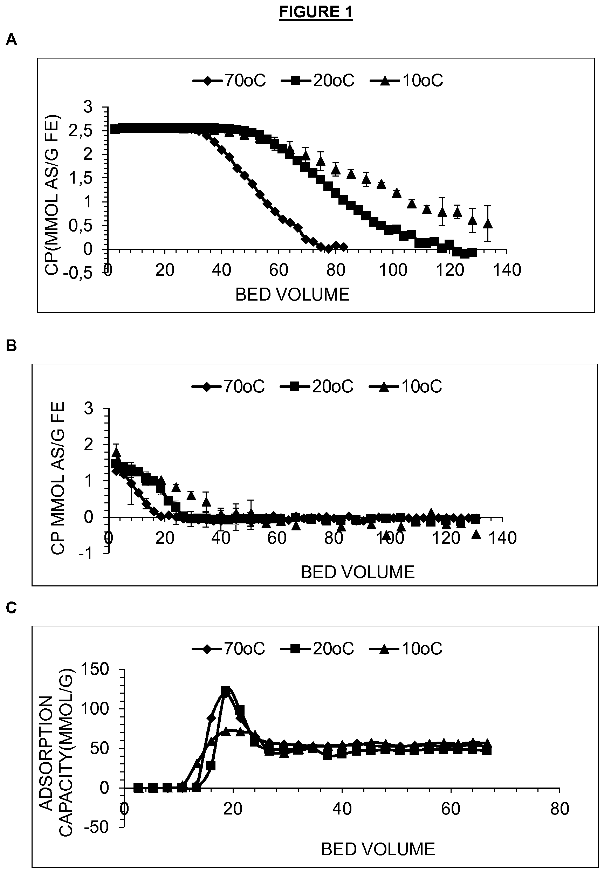

**Figure 1****.** The effect of temperature on the adsorption of As(V) was studied in the fixed bed mode by evaluating the adsorption at the temperature 10°C, 20°C and 70°C at pH 3.6 (figure 1a) pH 5.6 (figure 1b) and pH 2.1 (figure 1c) as shown in fig 1a,b and c. The adsorption phenomenon is more efficient when temperature decreases. In figure 1c, the phenomenon observed is explained in three points. First, after a period of adsorption, the adsorption is overloaded. The arsenic solution past from the top to the bottom of the adsorbent which should go through several layers of the packed adsorbent. It makes the flow rate of some of the arsenic solution to be slower, meanwhile, other arsenic solution which pass through the gap between the sponge keeps the original flow rate and go down to the exit solution quickly and the collective of these arsenic solution which has not been adsorbed gather together to be overloaded. Second, at pH<2.5, iron desorbed is very significant due to protons competition, nevertheless, at pH range 3-9 iron desorption is not quite important. Moreover, as the solution is under pH 2.1, the arsenic desorption occurred after adsorption. The arsenic concentration in the residual solution is increasing sharply and more and more arsenic accumulate which lead to a higher arsenic concentration than the initial arsenic concentration. But after a while, since so many irons are desorbed, the sponge has more porosity and place to adsorb the arsenic. That's why after the highest arsenic concentration in the residual solution; the arsenic concentration is falling down until it goes to be the initial arsenic concentration-the equilibrium condition.

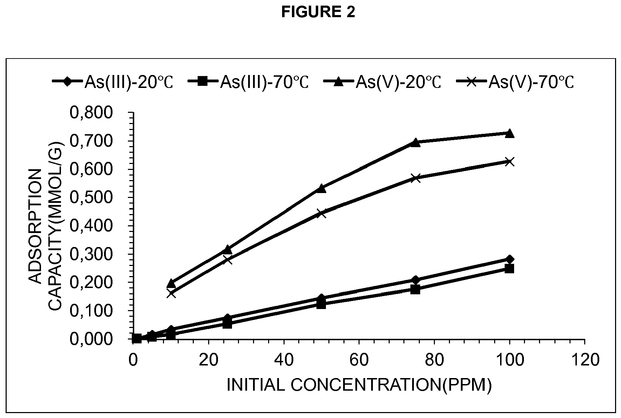

**Figure 2****.** Graph shows redox potential change, therefore transforming between the arsenite and arsenate, in order to control the adsorption-desorption. It is shown that sponge-SPION adsorbent has very good capacity for the As(V) adsorption and much lower capacity for the As(III). The adsorption process occurs when the arsenic existing as form As(V) and the desorption process proceed when the arsenic in the form of As(III). Lower temperature helps the adsorption process to react and higher temperature helps the desorption process to occur.

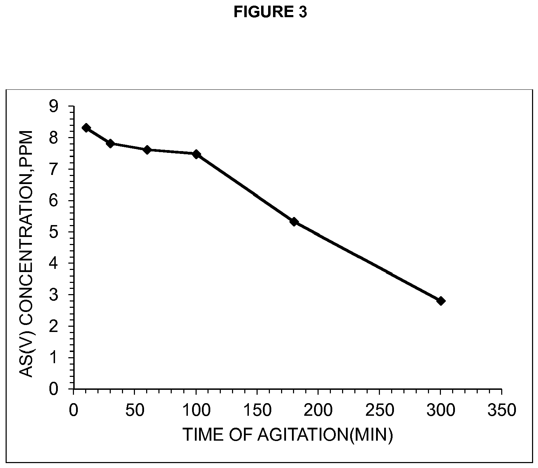

**Figure 3****.** Graph shows Tin (Sn) transforms the arsenate (As(V)) to arsenite (As(III)), which is very difficult to be adsorbed. That means the Tin change the redox potential, which could help to achieve the desorption process. The graph also shows time effect on-desorption process. The adsorbent (sponge loaded with SPION) was used for adsorb the arsenate, which make the surface and porous of the adsorbent is full of arsenate (10.34mg arsenic/g adsorbent). Then, 50mg of Tin foil was used as the reduction reagent for desorption

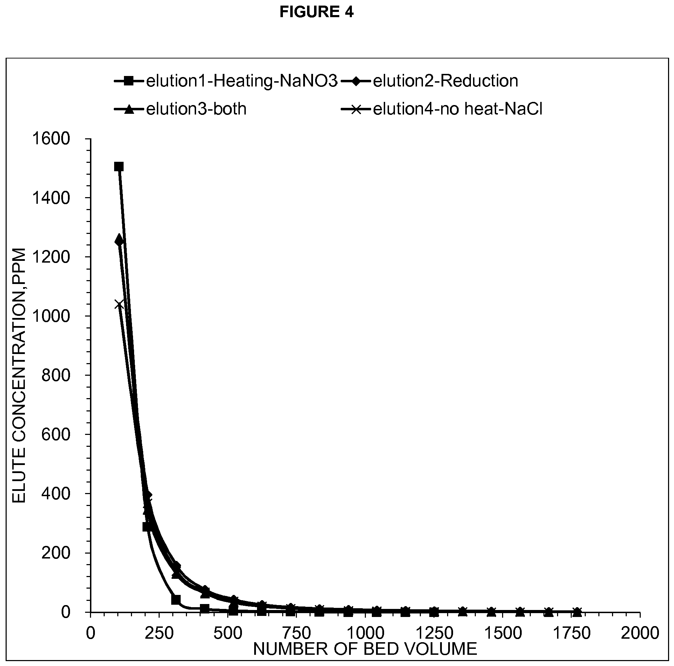

**Figure 4****.** Graph shows that the temperature and redox potential have significant effect on elution. Desorption by different methods. The graph shows that the temperature and redox potential have significant effect on elution. The complete desorption process is attributed to the thermo tuning effect combined with the redox potential function. Furthermore, this completely desorption results in very clean sponge loaded with SPION, which is fully prepared for the next cycle of adsorption. The recovery proportion is almost 100%.

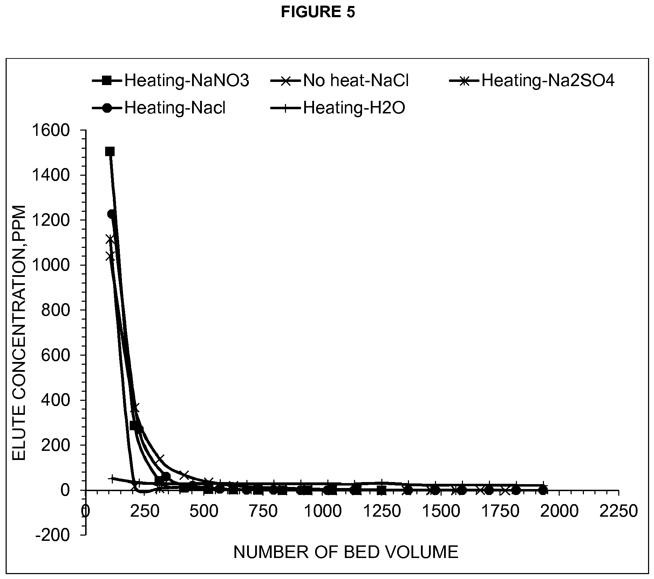

**Figure 5****.** Desorption by different methods. The graph shows that the temperature and redox potential have significant effect on elution. The complete desorption process is attributed to the thermo tuning effect combined with the redox potential function.
Furthermore, this completely desorption results in very clean sponge loaded with SPION,
which is fully prepared for the next cycle of adsorption. The recovery proportion is almost 100%.

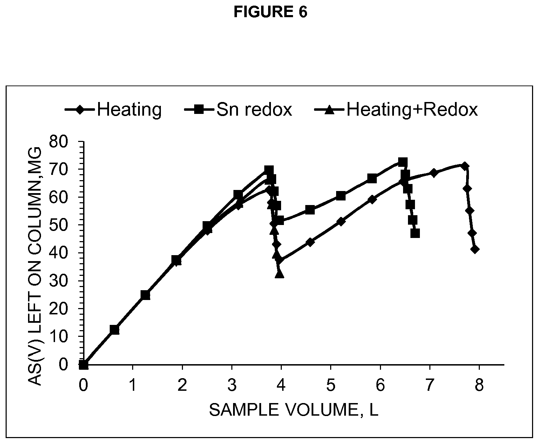

**Figure 6****.** It shows that the adsorption-desorption process is very stable and the results are very good. We use the 250ppm arsenic solution to do the adsorption and after the sponge-SPION almost saturated, the 20ppm arsenic solution pass through the column, which make desorption proceed very well. Then we repeat the adsorption-desorption process, the sponge-SPION adsorbent has the capacity to regenerate and reuse for several cycles. The only need is to change the redox potential or temperature for this adsorption-desorption process. It means that the adsorption and desorption process can repeat.

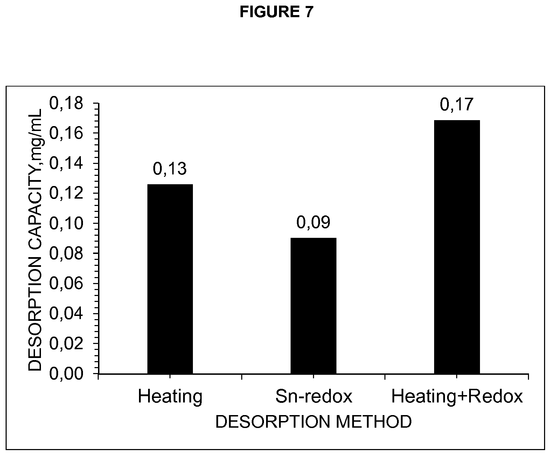

**Figure 7****.** Chart shows that at the elution step, when we add 1 ml of arsenic solution, it is obtained 0.13mg, 0.09mg, and 0.17mg of arsenic eluted from the column material. So when we use Heating+Redox method, the elution and desorption capacity have better results. The adsorbent filter used is sponge-SPION.

### DETAILED DESCRIPTION OF THE INVENTION

The present invention relates to a method for desorption of iron binding metals and oxyanions from superparamagnetic iron oxide nanoparticles (SPION) based adsorbent filters comprising the increase of the temperature of the SPION based adsorbent filters up to 70°C or above, wherein said iron binding metal is arsenic and wherein a redox compound is added, and wherein the redox compound is zinc (Zn) or tin (Sn) powder.

In one embodiment, the disclosure relates to a method for desorption of iron binding metals from superparamagnetic iron oxide nanoparticles (SPION) based adsorbent filters comprising the increase of the temperature of the SPION based adsorbent filters up to 70°C or above, wherein iron binding metal is arsenic, selenium. And, a redox compound is added, and more particularly, the redox compound added is zinc (Zn) powder or tin (Sn).

In one further embodiment, the disclosure relates to a method for desorption of oxyanions from superparamagnetic iron oxide nanoparticles (SPION) based adsorbent filters comprising the increase of the temperature of the SPION based adsorbent filters up to 70°C or above, wherein, a redox compound is added, and more particularly, the redox compound added is zinc (Zn) powder or tin (Sn).

In one further embodiment, the disclosure relates to a method for desorption of elements from superparamagnetic iron oxide nanoparticles (SPION) based adsorbent filters comprising the increase of the temperature of the SPION based adsorbent filters up to 70°C or above, wherein the element is phosphorous and wherein, a redox compound is added, and more particularly, the redox compound added is zinc (Zn) powder or tin (Sn).

In yet another aspect, the invention relates to a method comprising the following steps:
a) Adsorbing iron binding metal and oxyanions in a SPION based adsorbent filter, wherein the said iron binding metal is arsenic, and
b) Desorption of iron binding metals and oxyanions from superparamagnetic iron oxide nanoparticles (SPION) based adsorbent filters comprising the increase of the temperature of the SPION based adsorbent filters up to 70°C or above,
wherein in step a) potassium dichromate is added as oxidizing agent.

In one embodiment, the invention relates to a method comprising the following steps: a) Adsorbing iron binding metal and oxyanions in a SPION based adsorbent filter, wherein the said iron binding metal is arsenic, and b) Desorption of iron binding metals and oxyanions from superparamagnetic iron oxide nanoparticles (SPION) based adsorbent filters comprising the increase of the temperature of the SPION based adsorbent filters up to 70°C or above,
wherein in step a) potassium dichromate is added as oxidizing agent,
and wherein in step
a) the temperature of the SPION based adsorbent filter is 20°C or below.

In another embodiment, the disclosure relates to a method comprising the following steps:
a) Adsorbing iron binding metal and oxyanions in a SPION based adsorbent filter, and
b) Desorption of iron binding metals and oxyanions from superparamagnetic iron oxide nanoparticles (SPION) based adsorbent filters comprising the increase of the temperature of the SPION based adsorbent filters up to 70°C or above; wherein the iron binding metal is arsenic.

In another embodiment, the disclosure relates to a method comprising the following steps:
a) Adsorbing iron binding metal and oxyanions in a SPION based adsorbent filter, and
b) Desorption of iron binding metals and oxyanions from superparamagnetic iron oxide nanoparticles (SPION) based adsorbent filters comprising the increase of the temperature of the SPION based adsorbent filters up to 70°C or above; wherein in step a) the temperature of the SPION based adsorbent filter is 20°C or below and wherein the iron binding metal is arsenic.

In another embodiment, the disclosure relates to a method comprising the following steps:
a) Adsorbing iron binding metal and oxyanions in a SPION based adsorbent filter, and
b) Desorption of iron binding metals and oxyanions from superparamagnetic iron oxide nanoparticles (SPION) based adsorbent filters comprising the increase of the temperature of the SPION based adsorbent filters up to 70°C or above; wherein in step a) the temperature of the SPION based adsorbent filter is 20°C or below and wherein the iron binding metal is arsenic; wherein an oxidizing agent is added in step a) and a redox agent is added in step b).

In another more specific embodiment, the disclosure relates to a method comprising the following steps: a) Adsorbing iron binding metal and oxyanions in a SPION based adsorbent filter, and b) Desorption of iron binding metals and oxyanions from superparamagnetic iron oxide nanoparticles (SPION) based adsorbent filters comprising the increase of the temperature of the SPION based adsorbent filters up to 70°C or above; wherein in step a) the temperature of the SPION based adsorbent filter is 20°C or below and wherein the iron binding metal is arsenic; wherein an oxidizing agent is added in step a) and a redox agent is added in step b); wherein the oxidizing agent is potassium dichromate and the redox agent is zinc (Zn) powder or tin (Sn).

In a further aspect, the disclosure relates to a new reagent-less method for elements removal and recovery by an adsorption-- desorption system with sorbent regeneration by taking advantage of the synergic thermo tuning and redox potential adjust for the adsorption-desorption processes. Redox potential adjustment is done by variation in the electric field, so the addition of reagents is not necessary.

In yet another aspect, the present invention relates to employing the method according to claim 1 for recovering or recycling SPION based adsorbent filters.

The invention is hereby explained by the following examples which are to be construed as merely illustrative and not limitative of the scope of the invention.

### Materials and Methods:

### Temperature-dependence of arsenic adsorption by Forager sponge loaded with superparamagnetic iron oxide nanoparticle(sponge-SPION)

### Reagents and Apparatus

The As(V) source was sodium arsenate (Na2HAsO4 .7H2O), ACS reagent from Aldrich(Milwaukee, USA). Iron chloride(FeCl3. 6H2O) and Ferrous chloride(FeCl2. 4H2O) were ACS reagent from Aldrich(Milwaukee, USA), HCI were ACS reagents from Panreac S.A. (Barcelona, Spain).

Forager Sponge, an open-celled cellulose sponge which contains a water-insoluble polyamide chelating polymer. (formed by reaction of polyethyleneimine and nitrilotriacetic acid), was kindly supplied by Dynaphore Inc. (Richmond,VA,U.S.A.). This material is claimed to contain free available ethyleneamine and iminodiacetate groups to interact with heavy metals ions by chelation and ion exchange.

Arsenic and iron concentrations in solution were determined by the Colorimetric technique. The wavelength used for analysis were 840 nm(As), 490 nm(Fe).

### Preparation of the Adsorbents.

SPION are prepared in our lab by mixing iron(II) chloride and iron(III) chloride in the presence of ammonium hydroxide. First, deoxygenated the solution of NH4OH (0.7M) by nitrogen. Second, deoxygenated the solution of 12mL HCI (0.1M) by nitrogen and mix FeCl3·6H2O with it. Third, heat the NH4OH solution at 70 °C. Fourth, Add the FeCl3·6H2O solution into the NH4OH solution and react for 30min. Then, Add the FeCl2·4H2O in the previous solution with mechanic agitation of about 3000rpm and waiting for 45min, the dark precipitate will be formed, which consists of nanoparticles of magnetite. Last, wash it by MiliQ water which has been deoxygenated and centrifuged four times(3 times for 3 min and 5000rpm, 1 time for 10 min and 4500rpm) and preserve it by 50mL 0.1 M TMAOH.

An initial conditioning of the sponge consisting on the conversion into its acidic form by consecutive treatment with 1.0mol/L HCI, double distilled water, and HCI solution at pH 2.5 was carried out in a glass preparative column. A portion of this conditioned sponge was separated, dried during 24 h , and stored in a desiccator for its use

The sponge was loaded with iron oxide nanoparticles by using the nebulizer. The SPION-loaded sponge was dried during 24 h, and stored in a desiccator for its use. The SPION loading capacity was 0.0955 ± 0.0029 mmol Fe/g sponge.

### Characterization

We have synthesized the SPION for 5 times. And Each time, prepare three kinds of sample, including 1/100, 1/250, 1/1000(0.1mL SPION on 10mL TMAOH, 0.1mL SPION on 25mL TMAOH, 0.1mL SPION on 100mL TMAOH). We characterized the samples by TEM to see the particle size and dispersionSPION are highly dispersible in solutions. With particle sizes of from 6-20 nm, they offer a large surface area and superparamagnetic properties.

### Arsenic adsorption and desorption experiment

### Effect of contact time

Experiments to determine arsenic adsorption in different contact time were carried out at 2-240mins in batch conditions.

### Effect of initial concentration

Experiments to determine arsenic adsorption capacity in different initial concentration were carried out at 0.5-100ppm in batch conditions.

### Effect of temperature

Experiments to determine arsenic adsorption in different temperatures were carried out at temperature 10oC, 20oC and 70oC in batch conditions by using tightly plastic tubes containing weighted amounts of SPION-loaded sponges and measured volumes of arsenate solutions in the range 0.5-100 ppm As(V) at a given pH. Corresponding agitation was carried out in a rotary rack shaker during 1 h (this contact time was confirmed in separate experiments).

Experiments to determine the interfering effect of Fe on As(V) adsorption were carried out with 500ppm and 1000 ppm As(V) solutions (13.3 mmol/L) prepared in a medium containing 0.1 mL SPION under the pH=3.6 condition.

Experiments were repeated for the different conditions a minimum of two times.

Results: After adsorption by using the sponge loaded with SPION, the SPION show a tendency to agglomerate again since the absence of external ultrasonic force for some time, makes the van der Waals force to raise affecting the distribution again.

The effect of temperature on the adsorption of As(V) was studied by evaluating the adsorption at the temperature 10°C, 20°C and 70°C under pH 2.1 is shown in fig 1c. The phenomenon showed in the graph could be explained in three points. First, after a period of adsorption, the adsorption is overloaded. The arsenic solution past from the top to the bottom of the adsorbent which should go through several layers of the packed adsorbent. It makes the flow rate of some of the arsenic solution to be slower, meanwhile, other arsenic solution which pass through the gap between the sponge keeps the original flow rate and go down to the exit solution quickly and the collective of these arsenic solution which has not been adsorbed gather together to be overloaded. Second, at pH<2.5, iron desorbed is very significant due to protons competition, nevertheless, at pH range 3-9 iron desorption is not quite important.

Thus, in this adsorption process, at the beginning of the arsenic adsorption, the iron desorbing has not have significant impact on the adsorption since the arsenic solution(pH 2.1) has not gone through the column so many times, and it can adsorb the arsenic as usual. Then, after the arsenic solutions (pH 2.1) go through the column again and again, the iron desorbed from the sponge gradually, fewer iron oxide nanoparticles immobilizing in the sponge. Thus, the arsenic cannot be adsorbed effectively. Moreover, as the solution is under pH 2.1, the arsenic desorption occurred after adsorption. The arsenic concentration in the residual solution is increasing sharply and more and more arsenic accumulate which lead to a higher arsenic concentration than the initial arsenic concentration. But after a while, since so many irons are desorbed, the sponge has more porosity and place to adsorb the arsenic. That's why after the highest arsenic concentration in the residual solution; the arsenic concentration is falling down until it goes to be the initial arsenic concentration-the equilibrium condition. Desorption occurs as contact time increases increasing the effect at contact time at 70°C. Very high adsorption rates were achieved at the beginning because of the great number of sites available for the sorption operation, desorption equilibrium were then gradually achieved as time goes on. See figure 1.

The adsorption capacity by the sponge loaded with SPION under 293K and 343K follows a general trend in all cases, increasing markedly as the initial arsenic concentration increases.

A dual mechanism is proposed for As(V) adsorption on the SPION-loaded sponge: ionexchange on the protonated amine groups and additional ligand-exchange mediated by the immobilized Fe3+. The adsorption capacity which is enhanced by the increasing of the initial arsenic concentration is associated with kinetic aspects of arsenic adsorption. When the initial concentration is higher, the activation energy is higher, and then the arsenics are more actives to move to be adsorbed. The amount of arsenic exchanged onto the sponge and that exchanged onto the SPION increase with increasing initial As(V) concentration.

### Synergic thermo tuning of redox potential for clean removal of Arsenic:

### Reagents and Apparatus.

Na2HAsO4 .7H2O, FeCl3. 6H2O, FeCl2. 4H2O, were used as As(V), Fe(III), Fe(ll) sources. Zinc powder and Tin foil used for the reduction purpose.

Forager Sponge, supplied by Dynaphore Inc. (Richmond,VA,U.S.A.) was used as the support for the SPION. Metal concentrations in solution were determined by the Colorimetric technique. The wavelength used for analysis were 840 nm(As), 490 nm(Fe).

Lewatit S-3428 resin was supplied by Purolite.

### Preparation of the Adsorbents.

SPION are prepared in our lab by mixing iron(II) chloride and iron(III) chloride in the presence of ammonium hydroxide. First, deoxygenated the solution of NH4OH (0.7M) by nitrogen. Second, deoxygenated the solution of 12mL HCI (0.1M) by nitrogen and mix FeCl3·6H2O with it. Third, heat the NH4OH solution at 70 °C. Fourth, Add the FeCl3·6H2O solution into the NH4OH solution and react for 30min. Then, Add the FeCl2·4H2O in the previous solution with mechanic agitation of about 3000rpm and waiting for 45min, the dark precipitate will be formed, which consists of nanoparticles of magnetite. Last, wash it by MiliQ water which has been deoxygenated and centrifuged four times(3 times for 3 min and 5000rpm, 1 time for 10 min and 4500rpm) and preserve it by 50mL 0.1 M TMAOH.

An initial conditioning of the sponge consisting on the conversion into its acidic form by consecutive treatment with 1.0mol/L HCI, double distilled water, and HCI solution at pH 2.5 was carried out in a glass preparative column. A portion of this conditioned sponge was separated, dried during 24 h, and stored in a desiccator for its use.

The sponge was loaded with SPION by using the nebulizer. The SPION-loaded sponge was dried during 24 h, and stored in a desiccator for its use. The SPION loading capacity was 0.0955 ± 0.0029 mmol Fe/g sponge.

### Characterization.

The SPION, sponge loaded with SPION before using and after using has been characterized by TEM to see the particle size and dispersion. SPION is highly dispersible in solutions. With particle sizes of from 6-20 nm, they offer a large surface area and superparamagnetic properties.

### Temperature influence.

The adsorbent has been used to adsorb the arsenic in water; the results show that the adsorption capacity is influenced by the temperature. The adsorption capacity is decreasing as the temperature increases. That means as temperature increases, desorption is starting to occur. Lower temperature helps the adsorbent adsorb the arsenic and higher temperature helps the adsorbent to desorb the arsenic. So, the inventor adsorbs the arsenic by using the adsorbent under room temperature and desorbs the arsenic at 70°C.

### Redox potential effect on adsorption-desorption.

The potassium dichromate has been used to oxidize the As(III) to As(V) and use the Zn powder or Sn foil to reduce the As(V) to As(III). Since the adsorbent has much higher adsorption capacity of As(V) than that of As(III), the adsorbent can adsorb the arsenic by oxidizing all of the As(III) to be As(V) and desorb the arsenic by reducing the As(V) to be As(III).

### Column continuous mode.

The column continuous mode has been made in order to do the adsorption-desorption recycled processing. The adsorbent could be put inside the column. Once the wastewater which contains the arsenate and arsenite pass through the column, the arsenate and arsenite is loaded on the adsorbent and the clean water goes out. After loading, the arsenate and arsenite could be eluted by passing the hot water (70°C) or hot water combined with Sn. Therefore, the adsorbent can be reused.

Above all, the desorption process can be happened by reducing with the help of higher temperature and the adsorption process can be happened by oxidizing under room temperature (if the temperature is lower, for example, 10°C, then the adsorption capacity will higher than that under room temperature, but we consider about the room temperature is normal and easy to control).

Once finishing the desorption process, the adsorbent can be used again for adsorbing arsenic under room temperature. And then desorb the arsenic by using the Zn powder under 70°C again. To repeat this adsorption-desorption process for several cycles, then the adsorbent will be useless. But the recycled method and process is really amazing since it can be saved a lot of money for reuse the adsorbent.

The batch mode and column mode have been used to do the adsorption-desorption process. As for the batch mode, the arsenic is adsorbed by the adsorbent in a stoppered plastic bottle with the help of agitating. Desorption process is occurred either by putting the plastic bottle in the high temperature atmosphere or with the help of Zn powder or Sn. In the column mode, the arsenic is adsorbed by adsorbent inside the column by passing the wastewater through the column. Desorption process could be realized by passing the hot water or with the help of Sn.

Results: Figure 2 shows Changing the redox potential, therefore transforming between arsenite and arsenate, in order to control the adsorption-desorption: shows that the adsorbent has very good capacity for the As(V) adsorption and much lower capacity for the As(III). By changing the redox potential, the transform between As(V) and As(III) will lead the adsorption-desorption process and recycled use of the adsorbent. At the same time, the thermo tunning can help the adsorption-desorption to be much more significant and much quicker.

The redox potential-different time-desorption: The adsorbent (sponge loaded with SPION) was used to adsorb the arsenate, which make the surface and porous of the adsorbent is full of arsenate (10.34mg arsenic/g adsorbent). Then, 50mg of Tin foil was used as the reduction reagent for desorption. As time goes on, Sn could transform the arsenate to arsenite, which is very difficult to be adsorbed. That means the Tin change the redox potential, which could help to realize the desorption process. See figure 3.

As(III) pH-Eh, Effect of pH on Redox Potential. Reduction potential (also known as redox potential, oxidation / reduction potential, ORP, pE, ε, or *Eₕ*) is a measure of the tendency of a chemical species to acquire electrons and thereby be reduced. Reduction potential is measured in volts (V), or millivolts (mV). Each species has its own intrinsic reduction potential; the more positive the potential, the greater the species' affinity for electrons and tendency to be reduced.

The potassium dichromate may oxidize the arsenite to arsenate by changing the redox potential.

**Table 1 oxidation rate of As(III) to As(V) by potassium dichromate**

| Initial concentration of arsenite(ppm) | Concentration of potassium dichromate(mmol) | After oxidation, concentration of arsenate(ppm) | Conversion rate |
|---|---|---|---|
| 94.913 | 1.33 | 87.192 | 91.87% |
| 96.317 | 1.33 | 88.615 | 92.00% |

From table 1, it is very easy to show that the oxidizer (potassium dichromate) could convert ∼92% of arsenite to arsenate. Since arsenate has much higher adsorption rate than arsenite, which means changing the redox potential could help the adsorption to occur.

**Table 2 reduction rate of As(V) to As(III) by Zn powder**

| Arsenate loaded on the sponge(ppm) | After reduction, the arsenic left in the sponge(20oC)ppm | After reduction, the arsenic left in the sponge(70oC)ppm | Conversion rate |
|---|---|---|---|
| 18.569 | 4.119 | 1.239 | 93.33% |
| 18.931 | 3.780 | 1.827 | 90.35% |

Meanwhile, the reducing agent (Zn powder) could reduce the arsenate to arsenite by changing the redox potential, the conversion rate could be ∼90%, which is very high and could help the desorption to happen.

The synergic thermo tunning of redox potential part:

**Table3 Combination of temperature effect with redox potential effect for desorption**

| | After adsorption | | After desorption (20oC+ reduction) | | After desorption (70oC+ reduction) | |
|---|---|---|---|---|---|---|
| | Sponge (ppm) | Sponge-SPION(ppm) | sponge | Sponge-SPION | sponge | Sponge-SPION |
| | 18.569 | 21.398 | 3.780 | 9.165 | 1.239 | 7.571 |
| | 18.931 | 21.243 | 3.532 | 9.482 | 1.827 | 7.323 |

Table 3, the synergic thermo tunning of redox potential part: shows that in the bed mode, both of the temperature and redox potential have significant effect on arsenic adsorption-desorption. It could be combined the temperature effect with redox potential in order to get the better and stronger desorption process without adding reagents. It shows that in the bed mode, the adsorbent in the column could firstly adsorb the arsenic and then, the arsenic which is loaded in the adsorbent could be eluted by hot water with the help of Sn. After elution, the adsorbent could be reused to adsorb the arsenic again. Which means, the adsorption-desorption recycled process could be realized and the adsorbent could be reused for several times.

Column Experiment part, see figures 4 and 5.

### Experiment 1, elute by heating

1)Load As(v) 250ppm on the column(1g sponge+spion), collect the elute in six 50ml tubes.
2)Elute the column by 50ppm As(v) solution, by heating to 70°C, collect the elute in four 50ml tubes.
3)Reload As(v) 250ppm on the column, collect the elute in six 50ml tubes.
4)Elute the column by 50ppm As(v) solution, by heating to 70°C, collect the elute in four 50ml tubes.

### Experiment 2, elute by Sn-redox

1)Load As(v) 250ppm on the column(1g sponge+spion), collect the elute in six 50ml tubes.
2)Elute the column by 20ppm As(v) solution, by passing the Sn-redox column(80g),collect the elute in four 50ml tubes.
3)Reload As(v) 250ppm on the column, collect the elute in four 50ml tubes.
4)Elute the column by 20ppm As(v) solution, by passing the Sn-redox column,collect the elute in four 50ml tubes.

### Experiment 3, elute by heating+Sn-redox

1)Load As(v) 250ppm on the column(1g sponge+spion), collect the elute in six 50ml tubes.
2)Elute the column by 20ppm As(v) solution, by passing the Sn-redox column(80g), and heat to 70°C, collect the elute in four 50ml tubes.

Real waste water:

**Table 4: The original concentration of different elements in real waste water**

| | ppm |
|---|---|
| Fe | 979 |
| Al27 | 773.5 |
| Mg 26 | 715.5 |
| Zn | 198.5 |
| Cu | 194.8 |
| Mn 55 | 74.2 |
| Ca 44 | 39.9 |
| Si 28 | 34.7 |
| Na 23 | 14.1 |
| Co 59 | 7.0 |
| As | 3.1 |
| Li 7 | 2.8 |
| Ni | 2.2 |
| Cd 114 | 2.1 |
| Sr 88 | 1.8 |
| Ba 138 | 1.5 |
| Ti 47 | 1.4 |
| Cr 52 | 1.3 |
| V 51 | 1.3 |
| Sb 123 | 1.3 |
| Mo 95 | 1.3 |
| Ag 107 | 1.0 |
| Se 82 | 0.4 |
| Pb | 0.2 |

The real waste water sample is from a river called "Rio Tinto" from Huelva, Andalucia (Spain) and was provided by AGQ Mining and Bioenergy, a Spanish company. The real waste water sample has a high concentration of iron which has to be eliminated before arsenic removal.

The pre-treatment of the sample is bubbled with air for 4 hours, oxidizing the Fe2+ to Fe3+, the pH of the real waste water (originally 2.45), is changed to be 3.6 by adding NaOH. The precipitation is removed by using a filter, obtaining "iron-free" wastewater. But at the same time, the arsenic is also precipitated by iron precipitation. So the "iron-free" wastewater was doping by 60ppm arsenate solution, therefore the obtained The real wastewater using for our study is wastewater simulation, which contains inorganic arsenic species, meanwhile has other ions interferences.

After treating the wastewater, the arsenic is adsorbed and the results are shown below in the table.

**Table 5: Real waste water absorption results**

| Sample | Real Concentration (ppm) | Removal percentage (%) |
|---|---|---|
| Initial concentration | 45,29 | |
| After passing through the resin | 44,32 | |
| 1 | 0,99 | 97,82 |
| 2 | 22,66 | 49,97 |
| 3 | 36,05 | 20,39 |
| 4 | 39,37 | 13,08 |
| 5 | 39,63 | 12,50 |
| 6 | 44,26 | 2,28 |
| 7 | 43,26 | 4,49 |
| 8 | 43,99 | 2,87 |
| 9 | 43,78 | 3,34 |

### REFERENCES CITED IN THE APPLICATION

- [1] Le Zeng, Arsenic Adsorption from Aqueous Solutions on an Fe(III)-Si Binary Oxide Adsorbent, Water Qual. Res. J. Canada, 2004, 39(3), 267-275
- [2] Sushilrajkanel, Jean-Markgreneche, and Heechulchoi, Arsenic(V) Removal from Groundwater Using Nano Scale Zero-Valent Iron as a Colloidal Reactive Barrier Material. Environ. Sci. Technol. 2006, 40, 2045-2050
- [3] Dinesh Mohana, Charles U. Pittman Jr. Arsenic removal from water/wastewater using adsorbents-A critical review. Journal of Hazardous Materials 142 (2007) 1-53
- [4] Abdusalam Uheida, German Salazar-Alvarez, Eva Björkman, Zhang Yu, Mamoun Muhammed, Fe3O4 and γ-Fe2O3 nanoparticles for the adsorption of Co2+from aqueous solution. Journal of Colloid and Interface Science 298 (2006) 501-507
- [5] D. Morillo, G. Pérez and M. Valiente, Efficient arsenic(V) and arsenic(III) removal from acidic solutions with Novel Forager Sponge-loaded superparamagnetic iron oxide nanoparticles, Journal of Colloid and Interface Science 453 (2015), 132-141

## Claims

1. Method for desorption of iron binding metals and oxyanions from superparamagnetic iron oxide nanoparticles (SPION) based adsorbent filters comprising the increase of the temperature of the SPION based adsorbent filters up to 70°C or above, wherein said iron binding metal is arsenic and wherein a redox compound is added, and wherein the redox compound is zinc (Zn) or tin (Sn) powder.

2. Method comprising the following steps:
a) Adsorbing iron binding metal and oxyanion in a superparamagnetic iron oxide nanoparticles (SPION) based adsorbent filter, wherein said iron binding metal is arsenic,
b) Desorption of iron binding metal and oxyanion according to claim 1, wherein in step a) potassium dichromate is added as oxidizing agent.

3. Method according claim 2 wherein in step a) the temperature of the superparamagnetic iron oxide nanoparticles (SPION) based adsorbent filter is 20°C or below.

4. Method according to claim 1 for recovering or recycling superparamagnetic iron oxide nanoparticles (SPION) based adsorbent filters.

## Patentansprüche

1. Verfahren zur Desorption von eisenbindenden Metallen und Oxyanionen aus Adsorptionsfiltern auf der Basis von superparamagnetischen Eisenoxid-Nanopartikeln (SPION), umfassend das Erhöhen der Temperatur von Adsorptionsfiltern auf der Basis von SPION bis 70 °C oder darüber, wobei es sich beim eisenbindenden Metall um Arsen handelt und wobei eine Redoxverbindung zugegeben wird und wobei es sich bei der Redoxverbindung um Zink (Zn)- oder Zinn (Sn)-Pulver handelt.

2. Verfahren, umfassend die folgenden Stufen:
a) das Adsorbieren von eisenbindenden Metallen und Oxyanionen an einem Adsorptionsfilter auf der Basis von superparamagnetischen Eisenoxid-Nanopartikeln (SPION), wobei es sich beim eisenbindenden Metall um Arsen handelt,
b) die Desorption von eisenbindenden Metallen und Oxyanionen nach Anspruch 1, wobei in Stufe a) Kaliumdichromat als Oxidationsmittel zugesetzt wird.

3. Verfahren nach Anspruch 2,
wobei in Stufe a) die Temperatur des Adsorptionsfilters auf der Basis von superparamagnetischen Eisenoxid-Nanopartikeln (SPION) 20 °C oder weniger beträgt.

4. Verfahren nach Anspruch 1 zum Gewinnen oder Recyceln von Adsorptionsfiltern auf der Basis von superparamagnetischen Eisenoxid-Nanopartikeln (SPION).

## Revendications

1. Procédé de désorption de métaux se liant au fer et d'oxyanions à partir de filtres adsorbants à base de nanoparticules d'oxyde de fer superparamagnétiques (SPION) comprenant l'augmentation de la température des filtres adsorbants à base SPION jusqu'à 70 °C ou plus, dans lequel ledit métal se liant au fer est l'arsenic et dans lequel un composé redox est ajouté, et le composé redox étant une poudre de zinc (Zn) ou d'étain (Sn).

2. Procédé comprenant les étapes suivantes :
a) Adsorption d'un métal se liant au fer et d'un oxyanion dans un filtre adsorbant à base de nanoparticules d'oxyde de fer superparamagnétiques (SPION), ledit métal se liant au fer étant l'arsenic,
b) Désorption du métal se liant au fer et de l'oxyanion selon la revendication 1, du dichromate de potassium est ajouté en tant qu'agent d'oxydation à l'étape a).

3. Procédé selon la revendication 2 dans lequel à l'étape a) la température du filtre adsorbant à base de nanoparticules d'oxyde de fer superparamagnétiques (SPION) est de 20 °C ou moins.

4. Procédé selon la revendication 1 pour récupérer ou recycler des filtres adsorbants à base de nanoparticules d'oxyde de fer superparamagnétiques (SPION).
